# EUROPEAN PATENT SPECIFICATION

(11) **EP 3 052 760 B1**
(45) Date of publication and mention of the grant of the patent: **10.04.2019**
(21) Application number: 13818773.7
(22) Date of filing: 03.10.2013
(51) Int. Cl.: F01D 5/14, F01D 5/22, F01D 5/28, F01D 5/02

(54) **ROTOR STAGE OF AXIAL TURBINE WITH IMPROVED CHORD/PITCH RATIO**
ROTORSTUFE EINER AXIALTURBINE MIT VERBESSERTEM -SEHNEN-NEIGUNGS-VERHÄLTNIS
ÉTAGE DE ROTOR DE TURBINE AXIALE AVEC RAPPORT DE CORDE/PAS AMÉLIORÉ

(43) Date of publication of application: 10.08.2016
(73) Proprietor: Franco Tosi Meccanica S.p.A., 20025 Legnano (MI) (IT)
(72) Inventor: PESATORI, Emanuel, 20025 Legnano (Ml) (IT); SANVITO, Massimiliano, 20025 Legnano (Ml) (IT); POLLONI, Marco, 20025 Legnano (Ml) (IT); MONDELLINI, Giacomo, 20025 Legnano (Ml) (IT)
(74) Representative: Forattini, Amelia
(86) International application number: PCT/IB2013/002185
(87) International publication number: WO 2015/049548

(56) References cited:
- EP-A2- 0 900 920
- EP-A2- 1 201 878
- EP-A2- 1 895 142
- FR-A- 1 556 914
- GB-A- 579 784
- US-A1- 2009 028 717

## Description

### FIELD OF THE INVENTION

The present invention relates to a rotor stage of an axial turbine and to the blades of said rotor stage according to the preamble of the independent claims.

### KNOWN PREVIOUS ART

The bladed rotor stages of a gas or steam turbine are formed by a series of blades arranged around a shaft adapted to rotate around an axis. A plurality of housings, each adapted to receive a blade root that is impeded from moving in a radial direction, are made so as to counter the centrifugal force. The blades comprise a root and an airfoil portion ending with a blade tip at the top of the airfoil portion. The blade in its turn has a normally concave pressure side and a normally convex suction side. Referring to the direction and the way the blade is hit by the fluid, the airfoil portion of a blade has a leading edge and a trailing edge whose distance, identified on a circumferential section, is called chord. With circumferential section, the section is intended obtained by the intersection with a cylindrical surface with circular directrix having the axis coincident with the machine axis. The airfoil portion of the blade arranged on the shaft in an operating position extends mainly in radial direction. The distance between the circumferential sections of two subsequent blades, measured in tangential direction, normal to the radial direction and to the axis, is called pitch. The ratio between the chord and the pitch takes the name of "solidity". The different rotor stages have airfoil portions progressively longer proceeding downstream, in order to take into account the fluid expansion downwards as the pressure decreases. At the blade tips there can be a strap, intended to limit the fluid flow outside the rotor ducts formed between subsequent blades.

The optimal value of the solidity depends on the type of turbine and on the fluid it has to process.

In the axial turbines the pitch of the rotor blades increases as the distance from the axis increases, since the blades develop in a mainly radial direction, two circumferential sections of subsequent blades move mutually away. This means that in order to keep the solidity within an optimal value, the chord should be increased as the radial distance from the axis increases. Such an increase of the chord constitutes an increase of the burden from the structural point of view and often becomes unacceptable.

In order to reduce the stresses due to the centrifugal field, the trade-off is accepted of having an optimal value of the solidity in the center part of the rotor blade assembly, giving over an optimal value at the base and tip.

A problem is that a too high solidity and a too low solidity both result in a reduction of the turbine yield, which instead, by keeping fixed other parameters, should be maximized, in order to increase the power the consumptions being the same or to reduce the consumptions the power being the same.

In order to solve this problem in US 1263473 A, EP 1201878 A2, US 2407223 A and EP 1895142 A2 rotor stages are seen, split up in an inner circular crown with a lower number of airfoil portions and an outer circular crown with a larger number of airfoil portions. In US 2009028717 A1 a rotor stage is described comprising branching blades.

Another problem of axial turbines is the strength of materials, which are highly stressed by the centrifugal force. In fact, the rotational speed is such to bring the strength of materials to the limit, thereby the blade sections are calculated also for resisting against the centrifugal force they have to withstand.

A further problem common to axial turbines is that the dynamic stresses can create vibrations that can become dangerous for the turbine integrity. Low frequencies are generally more dangerous than high frequencies.

Object of the present invention is therefore to realize a rotor stage of axial turbine and blades of said rotor stage, which allow to overcome the mentioned drawbacks. In particular, an object is to improve the overall solidity of the rotor stage, improving the yield thereof.

Another object is to limit centrifugal stresses on the material.

A further object is to limit the effects of dynamic stresses.

### SUMMARY OF THE INVENTION

Said objects are reached by a rotor stage and blades that compose said rotor stage, whose inventive characteristics are pointed out by the claims.

### BRIEF DESCRIPTION OF THE FIGURES

The invention will be better understood from the following detailed description, provided by way of example only, and therefore not limiting, of three preferred embodiments illustrated in the attached drawings, in which:
Fig. 1 shows a perspective view of a rotor stage of axial turbine according to the invention;
Fig. 2 shows a perspective view of a portion of the rotor stage according to a first embodiment of the blades;
Fig. 3 shows a cross sectional view, with a plane normal to the axial direction of the portion of rotor stage according to the embodiment of Fig. 2;
Fig. 4 shows a second embodiment of a blade;
Fig. 5 shows a third embodiment of a blade;
Fig. 6 shows the comparison between two circumferential sections of the blades in case of design according to the invention and in case of conventional design.

### DETAILED DESCRIPTION OF SOME EMBODIMENTS OF THE PRESENT INVENTION

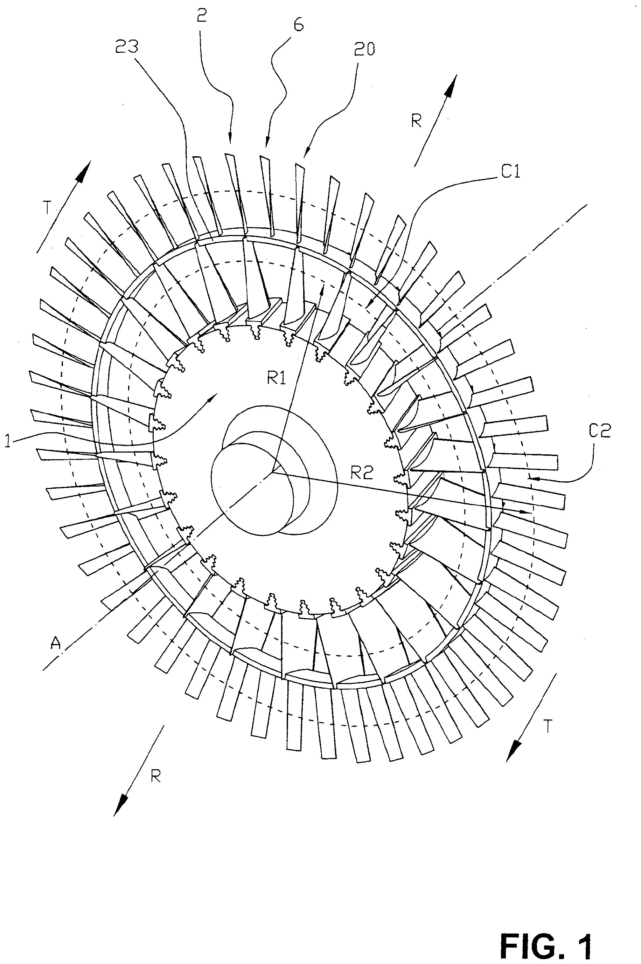

In figure 1, the axis A, the radial direction R and the tangential direction T are shown. The axis A corresponds to the rotation axis of the rotor stage, the radial direction R lies on a plane normal to the axis A and outgoes from the same axis A. The tangential direction T is the direction of movement of a blade which rotates around the axis A and, given a point of the rotor stage, it is therefore normal to the plane comprising the axis A and the radial direction R passing through that point. This reference frame will be used hereinafter and in the claims assuming that the blades, in the various embodiments, are arranged in operating position on the shaft of the rotor stage.

Referring to Fig. 1, it can be seen that the rotor stage of an axial turbine comprises a shaft 1, adapted to rotate around an axis, and a plurality of blades, having at least one airfoil portion, which extends in a substantially radial direction R normal to the axis A. At a first radial distance R1 from the axis A, a number of airfoil portions is arranged lower than the number of airfoil portions that are arranged at a second radial distance R2 from the axis A, the first radial distance R1 being smaller than the second radial distance R2. The airfoil portions arranged at the second radial distance R2 extend from those arranged at the first radial distance R1, as being extensions or branches of the latter, made in a single piece or else separable.

At least some blades of the rotor stage are branched off from the center to the periphery, increasing the number of vanes present at a radial distance R2 greater than R1.

In case the branches are all at the same radial distance from the axis A, on the rotor in a plane perpendicular to the axis A, an inner circular crown C1 and an outer circular crown C2 centered on the axis A and spaced apart by a circumferential element 23, can be distinguished. Said inner circular crown C1 comprises a number of airfoil portions lower than the number of airfoil portions comprised in the outer circular crown C2.

By increasing the number of airfoil portions arranged in a most outer circular crown, the ratio chord/pitch is increased bringing it back to values closer to optimal values.

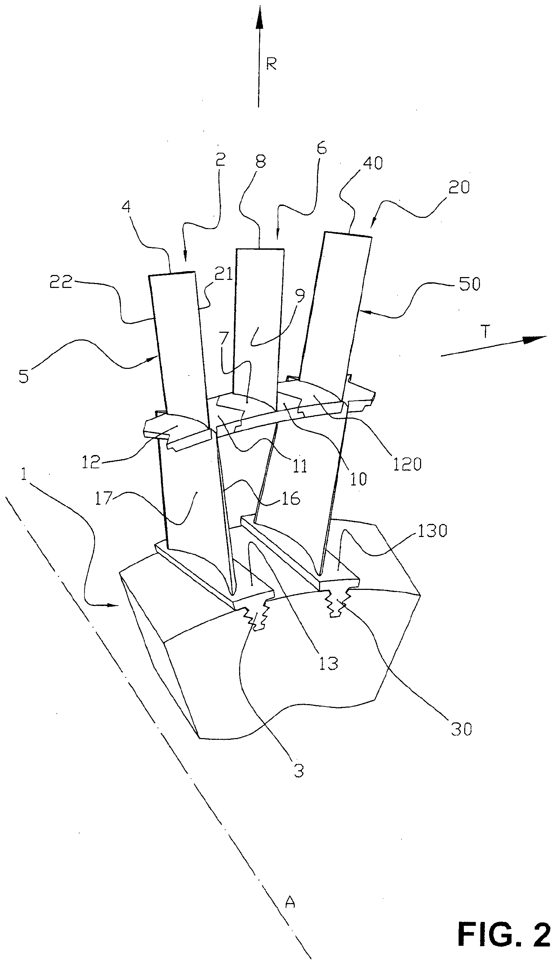

Referring to the first embodiment represented in figures 2 to 3, the rotor stage of an axial turbine comprises a plurality of bearing blades 2, 20, each of which comprises a root 3, 30 adapted to be inserted in a housing made on the shaft 1 and to constrain the bearing blade to the shaft 1, a tip 4, 40 and an airfoil portion 5, 50, which extends from the top 13, 130 of the root 3, 30 to the tip 4, 40 in a substantially radial direction R.

Between each couple of bearing blades an additional blade 6 is inserted, which comprises a tip 8, a base 7, an airfoil portion 9, extending from the base 7 to the tip 8 in a substantially radial direction R. Usually the additional blade is not adapted to directly connect to the shaft 1, on the contrary is adapted to connect to the bearing blades which are at its sides. It has therefore a foot 10, extending from the base 7 in a substantially tangential direction T normal to the axis A and the radial direction R. Each bearing blades 2, 20 further comprises a first and a second rest element 11, 12 departing respectively from the suction side and the pressure side of the blade in a substantially tangential direction (T), or from the tip in a substantially tangential direction T.

The foot 10 is adapted to constrain to the rest elements 11, 120 of two subsequent blades to connect the additional blade 6 to the two bearing blades 2, 20 between which it is interposed.

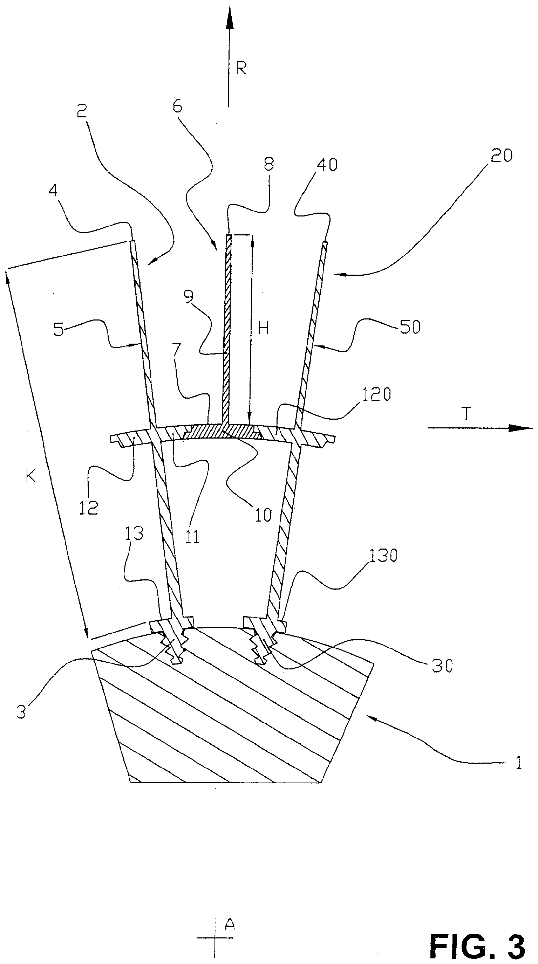

Referring to Fig. 3, the additional blades 6 has a height H of the blade 9 smaller than the height K of the airfoil portion 5, 50 of the bearing blades 2, 20.

It is also possible that the additional blade comprises two or more airfoil portions and that the airfoil portion of the bearing blade does not extend beyond the first and second rest element. In this case, the airfoil portion of the additional blade could be longer than the airfoil portion of the bearing blade.

Advantageously, the foot 10 of the additional blade 6 has a cross section, obtained with a plane normal to the axis A, which tapers as departing from the axis A, at least for a length.

Since the two rest elements of two subsequent blades extend in a direction tangential one to another, a tapered or wedged shape of the foot of the additional blade allows the centrifugal force to urge the foot to wedge forcedly between the rest elements of two subsequent blades, producing a stiffening of the whole blade assembly along the circumferential element 23, composed by the succession of feet of the additional blades and the rest elements of the bearing blades. This allows to increase the natural frequencies of the blades and make them less sensitive to dynamic stresses.

The increase of the number of airfoil portions in a peripheral circular crown, obtained by the interposition of additional blades 6 between the bearing blades 2, 20, allows to increase the peripheral solidity bringing it back to values close to the desired ones.

Despite a peripheral increase of the number of airfoil portions with respect to the number of airfoil portions closer to the axis, the airfoil portions of the additional blades and the airfoil portions of the bearing blades extending outwards beyond the rest elements 11, 12, can have a circumferential section, which on the whole represents an area smaller than the fewer airfoil portions arranged closer to the axis. In fact, in the bearing blade the section of the airfoil portion that is at distance from the axis greater than the rest elements, is relieved of some of the mass of the airfoil portion itself, translating during the operation in a centrifugal force.

A further weight reduction can be obtained realizing the additional blades 6 in a material with lower density than that of the material the bearing blades 2, 20 are made of. For example, the additional blade 6 can be made of aluminium alloy or composite material, whereas the bearing blades 2, 20 can be made of steel or titanium alloys.

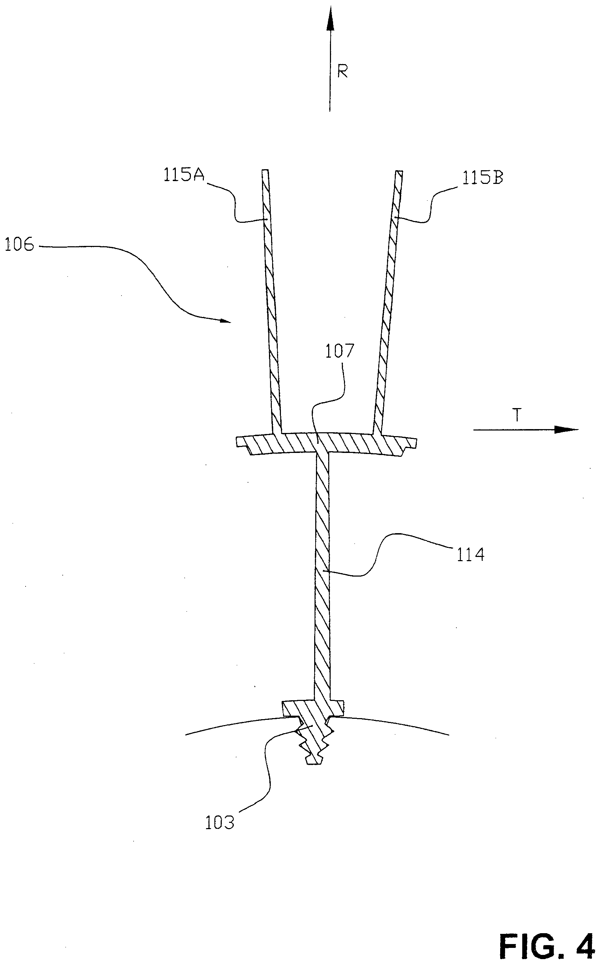

Referring to Fig. 4 in a second embodiment of the invention, the rotor stage comprises multiple bearing blades 106, with a primary airfoil portion 114 directly connected to the top of the root 103 and two or more secondary airfoil portions 115A and 115B departing from the primary airfoil portion 114 towards the periphery of the rotor stage. The two secondary airfoil portions 115A and 115B are joined by a base 107 extending from the primary airfoil portion 114 in a substantially tangential direction T and in the two ways.

Of course, the primary airfoil portion 114 can extend beyond the base 107 realizing a blade shape with three secondary airfoil portions (not represented for the sake of simplicity).

At least one or both the ends of the base 107 extend in a tangential direction beyond the secondary airfoil portions and are shaped so that to be coupled at the rest elements of bearing blades with single airfoil portion, which alternate in the rotor stage to this second embodiment, so that to form a continuous circumferential element 23 in the rotor. The circumferential element being formed of many parts mutually rested or constrained, small movements allow to damp the vibrations induced by the dynamic stresses.

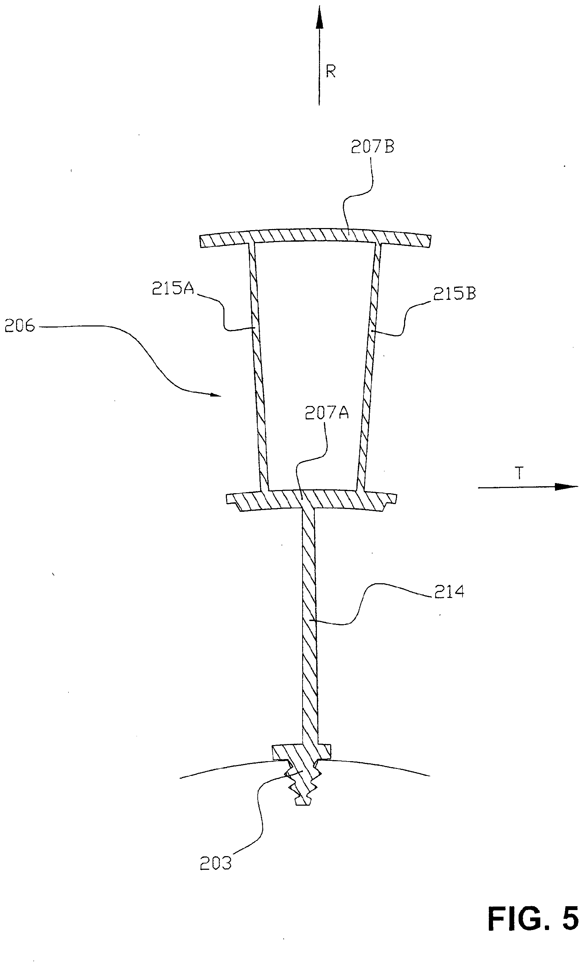

In Fig. 5 of a third embodiment of the invention, the rotor stage comprises multiple blades 206, wherein two of the secondary airfoil portions 215A, 215B are connected, using a denomination referring to the radial direction R outgoing from the axis A, from a bottom base 207A and from a top base 207B or from a strap, which extends in a substantially tangential direction T, forming a closed quadrilateral with the secondary airfoil portions 215A, 215B. The presence of the top base 207B and the closed quadrilateral shape counter the bending deformation of the bottom base 207A, assuring a greater stiffness to the structure which has to withstand a high centrifugal force during the operation.

In a rotor stage, multiple bearing blades and bearing blades with single airfoil portion can be present simultaneously, better if in an alternate arrangement, or multiple blades and additional blades, the multiple blades provided with root being a particular case of bearing blade. It is better if the blades with single airfoil portion comprise rest elements for supporting the ends of the bases of the multiple blades against the action of the centrifugal force.

It is then possible that the additional blades have multiple airfoil portion.

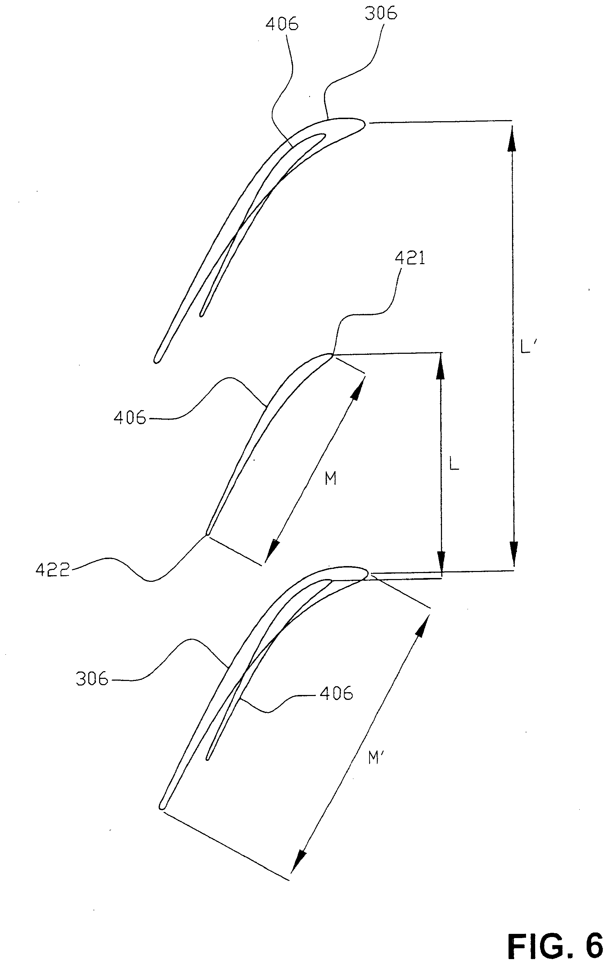

Referring to Fig. 6, the profiles 306 are seen of the circumferential section of airfoil portions of an axial rotor stage designed conventionally without using the solution of the present invention, and the profiles 406 of a circumferential section of the airfoil portions according to the present invention. The two sections are taken at the same distance from the axis A of the rotor stage and in a quite peripheral region in which the airfoil portions according to the invention have been already branched off. On the drawing a leading edge 421, a trailing edge 422, a pitch L and a chord M can be distinguished. In figure 6 pitch and chord of the blades according to the conventional design are indicated by L' and M'.

Once the blade has been designed, the chord/pitch ratio, named solidity, can be calculated as a function of the radial distance from the axis A.

If we assume to introduce a blade according to the invention keeping the same "solidity" of the conventional blade, it is evident that the chord has to be halved by having doubled the number of airfoil portions, i.e. the profile has to be scaled in its plane of a 0.5 factor. Scaling a profile by 0.5 by doubling the number of blades allows to hold the same speed triangles at the inlet and outlet of the conventionally designed array, meaning to be in a fluid-dynamic equivalence (i.e. the two arrays work in the same way).

It is easy to observe that by scaling the profile by 0.5 and doubling the number of profiles, the area of the single section being proportional to the square of the scaling dimension, becomes 1/4 with respect to the not-scaled profile. Considering that the blades are doubled, it results that the area of the two profiles replacing a single profile is half the profile according to the conventional solution.

Preserving the solidity and doubling the number of profiles, a 50% mass reduction is obtained of the area wherein the airfoil portions are doubled. In fact, the total mass of the two profiles carrying out the same work of the single profile is the half. This results in a significant structural advantage reducing the centrifugal forces acting on the bearing blades, which can therefore have a smaller section also in proximity of the root.

It can be observed that, in order to have the same mass of the conventional array, a scaling ratio of 0.707 can be used. In fact 0.707 squared is 0.5, which doubled is 1 (doubled number of profiles).

However using a scaling by 0.707 a significant increase of solidity is obtained.

By varying the scaling ratio between 0.5 and 0.707 a fair trade-off between fluid-dynamic and structural efficiency can be found.

Thus, a scaling ratio of 0.5 results in the maximum structural advantage concerning stresses and the minimum fluid-dynamic advantage. A scaling ratio of 0.707 results in the maximum fluid-dynamic advantage and minimum structural advantage concerning stresses.

A further advantage can be introduced by using a lighter material for the additional blade of the first embodiment.

In order to further clarify the concept, the following numerical example referred to Fig. 6 can be done:
profiles 306 = array with standard blade, N vanes in the same rotor stage;
profiles 406 = array with blade after the branch according to the invention, 2N blades with profile scaled by 0.5.

Assuming for the standard or conventional profiles 306 a pitch L' of 118.35 mm and a chord M' of 161.87 mm, the conventional profiles 306 have a solidity of 161.87 / 118.35 = 1.37 and a standard section area = 1305.8 mm².

For the profiles 406 according to the invention, scaled by 0.5 after the branch, a pitch L of 59.1 mm and a chord M of 81.07 mm are obtained, for the profiles 406 the solidity is 81.07 / 59.1 =1.37 and a section area of a airfoil portion = 236.5 mm².

By scaling the profiles by 0.5 the same solidity is kept, whereas the overall section of the airfoil portions after the branch is much smaller, as well as the mass and the stresses due to the centrifugal force.

By choosing a scaling that reduces the overall mass of the blades and consequently the centrifugal stresses, with respect to a conventional design, the section of an airfoil portion can be reduced too before the branch.

An additional blade of an axial turbine comprises at its ends a base 7 and a tip 8. The additional blade also comprises an airfoil portion 9, which extends from the base 7 to the tip 8 in a substantially radial direction R. The additional blade is not usually suitable to be constrained to the shaft directly, but is suitable to be constrained, both by releasable constraining means and welding, to other rotor blades by a foot 10, which extends at the base 7 in a substantially tangential direction T normal to the axis A and to the radial direction R. Said foot is adapted to constrain the additional blade at least to a first or a second rest element 11, 12 of two subsequent bearing blades arranged in a rotor stage.

A bearing blade of a rotor stage of an axial turbine according to the invention comprises a root 3, a tip 4 and an airfoil portion 5, which extends from the top 13 of the root 3 to the tip 4 in a substantially radial direction R. The blade has a usually convex suction side 16 and a usually concave pressure side 17. Said root 3 is adapted to constrain the blade to the shaft 1. The bearing blade comprises a first and a second rest element 11, 12, which extend respectively from the suction side 16 and from the pressure side 17 of the airfoil portion 5, in a substantially tangential direction T. Said first and second rest element 11, 12 are both adapted to be constrained to an end of a foot of an additional blade.

The multiple bearing blade 106 of rotor stage according to the second embodiment of the invention, represented in Fig. 4, comprises a primary airfoil portion 114, extending in a substantially radial direction R and at least two secondary airfoil portions 115A, 115B departing from the primary airfoil portion 114.

The multiple bearing blade 206 according to the third embodiment, represented in Fig. 5, comprises two secondary airfoil portions 215A, 215B which depart from the primary airfoil portion 214 and are connected, referring to the radial direction R outgoing from the axis A, by a bottom base 207A and a top base 207B, which extend in a substantially tangential direction T, forming a closed quadrilateral with the secondary airfoil portions 215A, 215B. This closed quadrilateral configuration, wherein the top base can comprise a strap, provides the structure with stiffness, avoiding an excessive bending of the bottom base 207A, due to centrifugal forces.

It is of course possible that the multiple bearing blade according to the second embodiment comprises three or more secondary airfoil portions and that the multiple blade according to the third embodiment comprises three or more secondary airfoil portions forming two or more closed quadrilaterals.

It is of course possible that the rotor stage according to the invention has several branches of the blades towards the periphery.

For example in a center circular crown, in an intermediate circular crown and in a third more peripheral circular crown, N blade, 2N blades and 3N blades could be present, respectively.

This can be obtained by using multiple blades with several branches, in which the primary airfoil portion splits in two or more secondary airfoil portions, which in their turn split in two or more tertiary airfoil portions, or else with additional blades having multi-airfoil portions.

Due to the fact that at least some blades of the rotor stage are branched off from the center to the periphery, by increasing the number of blades at a radial distance R2 greater than R1, the chord/pitch ratio called "solidity" can be kept around optimal values of the radial distance R variation. This allows to improve the output of the rotor stage and to decrease the overall mass of the blades.

Due to the fact that bearing blades connected to the shaft, and additional blades connected to the bearing blades and separable therefrom can be present, a great easiness can be obtained during assembly.

By realizing the additional blades in materials with lower density with respect to the bearing blades, a smaller centrifugal stress of the bearing blades can be obtained.

The foot of the additional blade, which is wedged between the rest elements protruding between subsequent bearing blades, allows to increase the stiffness of the rotor stage, thereby reducing the sensitivity to vibrations caused by dynamic stresses and allowing a better vibration damping.

Blades with multiple airfoil portions allow an easier and faster assembly. Furthermore, multiple blades with a quadrilateral structure allow a particular stiffness and thus an effective countering against deformations due to centrifugal forces. Particularly important is the possibility, by increasing the number of peripheral airfoil portions, of reducing the overall section of the blades with respect to conventional rotor stages and thus saving on material, obtaining both economical and structural advantages. Another advantage of fluid-dynamic type can be added to this advantage, at the same time optimizing the array solidity. Alternatively, according to the designer choice, the overall section of the blades and thus the centrifugal stress can be preserved, significantly improving the solidity.

## Claims

1. Rotor stage of an axial turbine comprising a shaft (1), adapted to rotate around an axis (A), and a plurality of blades having at least one airfoil portion which extends in a substantially radial direction (R) normal to the axis (A); at a first radial distance (R1) from the axis (A), there being arranged a number of airfoil portions lower than the number of airfoil portions which are arranged at a second radial distance (R2) from the axis (A); the first radial distance (R1) being smaller than the second radial distance (R2); said rotor stage comprising a plurality of bearing blades (2, 20), each of which comprises a root (3, 30), a root top (13, 130), a blade tip (4, 40) and an airfoil portion (5, 50), having a suction side (16) and a pressure side (17) and extending from the root top (13, 130) to the blade tip (4, 40) in a substantially radial direction (R), said rotor stage further comprising a plurality of additional blades (6), each of which comprises a blade tip (8), a base (7), an airfoil portion (9), extending from the base (7) to the blade tip (8) in a substantially radial direction (R); said rotor stage being **characterized in that** said root (3, 30) is adapted to constrain the bearing blade to the shaft (1); and in each additional blade (6) comprising a foot (10) extending from the base (7) in a substantially tangential direction (T) normal to the axis (A) and to the radial direction (R), said bearing blades (2, 20) comprising a first and second rest element (11, 12) extending from the suction and the pressure sides of the airfoil portion, respectively, in a substantially tangential direction (T), said foot (10) being adapted to constrain to the rest elements (11, 120) of two subsequent bearing blades, to connect the additional blade (6) to said two subsequent bearing blades (2, 20).

2. Rotor stage according to claim 1, **characterized by** having, in a plane perpendicular to the axis (A) an inner circular crown (CI) and an outer circular crown (C2), both centered on the axis (A) and spaced a part by a circumferential element (23) composed by the succession of feet (10) of the additional blades (6) and the rest elements (11, 12) of the bearing blades (2, 20), said inner circular crown (CI) comprising a number of airfoil portions lower than the number of airfoil portions comprised in the outer circular crown (C2).

3. Rotor stage of an axial turbine according to the preceding claim, **characterized in that** each of said additional blades (6) has an height (H) of the airfoil portion (9) smaller than the height (K) of the airfoil portion (5, 50) of the bearing blades (2, 20).

4. Rotor stage of an axial turbine according to the preceding claim, **characterized in that** said foot (10) has a cross section, obtained with a plane normal to the axis (A), which, at least for a length, tapers departing from the axis (A).

5. Rotor stage of an axial turbine according to one of claims 1 or 2, **characterized by** comprising at least one multiple bearing blade (106), having a primary airfoil portion (114) which branches off in at least two secondary airfoil portions (115 A, 115B), the two secondary airfoil portions (115 A, 115B) being connected by a base (107) which extends from the primary airfoil portion (114) in substantially tangential direction (T) and in the two ways, at least one of the ends of the base (107) extending in tangential direction (T) beyond the corresponding secondary airfoil portions (115 A, 115B).

6. Rotor stage of an axial turbine according to the preceding claim, **characterized by** comprising a multiple blade (206) wherein two of said secondary airfoil portions (215 A, 215B) are connected, referring to the radial direction (R) outgoing from the axis (A), by a bottom base (207 A) and a top base (207B), extending in substantially tangential direction (T), forming a closed quadrilateral with the secondary airfoil portions (215A, 215B).

7. Rotor stage of an axial turbine according to one or more of claims 1 to 4, **characterized in that** said additional blade (6) is made of a material having density lower than the density of the material the bearing blades (2, 20) are made of.

8. Rotor stage of an axial turbine according to the preceding claim, **characterized in that** said additional blade (6) is made of aluminium alloy and the bearing blades (2, 20) are made of steel alloy.

9. Rotor stage of an axial turbine according to the claim 7, **characterized in that** said additional blade (6) is made of a composite material.

## Patentansprüche

1. Rotorstufe einer Axialturbine, die eine Welle (1) umfasst, welche ausgebildet ist, um sich um eine Achse (A) zu drehen, und eine Vielzahl von Schaufeln mit mindestens einem Blattprofil, der sich in einer im Wesentlichen radialen Richtung (R) senkrecht zu der Achse (A) erstreckt; wobei in einem ersten radialen Abstand (R1) von der Achse (A) eine Reihe von Flügelabschnitten angeordnet ist, deren Anzahl niedriger ist als die Anzahl von Flügelabschnitten, die in einem zweiten radialen Abstand (R2) von der Achse (A) angeordnet sind; wobei der erste radiale Abstand (R1) kleiner ist als der zweite radiale Abstand (R2); wobei die Rotorstufe eine Vielzahl tragender Schaufeln (2, 20) umfasst, von denen jede einen Fuß (3, 30), eine Fußspitze (13, 130), eine Schaufelspitze (4, 40) und einen Flügelabschnitt (5, 50) umfasst, der eine Saugseite (16) und eine Druckseite (17) hat und sich in einer im Wesentlichen radialen Richtung (R) von der Fußspitze (13, 130) zur Schaufelspitze (4, 40) erstreckt; wobei die Rotorstufe weiter eine Vielzahl zusätzlicher Schaufeln (6) umfasst, von denen jede eine Schaufelspitze (8), eine Basis (7), einen Flügelabschnitt (9) umfasst, der sich in einer im Wesentlichen radialen Richtung (R) von der Basis (7) zur Schaufelspitze (8) erstreckt; wobei die Rotorstufe **dadurch gekennzeichnet ist, dass** der Fuß (3, 30) ausgebildet ist, um die tragende Schaufel an der Welle (1) zu halten; und dadurch, dass jede zusätzliche Schaufel (6) einen Fuß (10) umfasst, der sich von der Basis (7) in einer im Wesentlichen tangentialen Richtung (T) senkrecht zur Achse (A) und zur radialen Richtung (R) erstreckt; wobei die tragenden Schaufeln (2, 20) ein erstes und ein zweites Auflageelement (11, 12) umfassen, das sich in einer im Wesentlichen tangentialen Richtung (T) von der Saugbeziehungsweise der Druckseite des Flügelabschnitts erstreckt; wobei der Fuß (10) ausgebildet ist, um die Auflageelemente (11, 120) zweier aufeinander folgender tragender Schaufeln zu halten, um die zusätzliche Schaufel (6) mit den beiden aufeinander folgenden tragenden Schaufeln (2, 20) zu verbinden.

2. Rotorstufe gemäß Anspruch 1, **dadurch gekennzeichnet, dass** sie auf einer Ebene senkrecht zur Achse (A) einen kreisförmigen Innenkranz (C1) und einen kreisförmigen Außenkranz (C2) hat, beide um die Achse (A) zentriert und beabstandet durch ein Umfangselement (23), das aus der Folge von Füßen (10) der zusätzlichen Schaufeln (6) und den Auflageelementen (11, 12) der tragenden Schaufeln (2, 20) besteht; wobei der kreisförmige Innenkranz (C1) eine niedrigere Anzahl von Flügelabschnitten umfasst als der kreisförmige Außenkranz (C2) .

3. Rotorstufe einer Axialturbine gemäß dem obigen Anspruch, **dadurch gekennzeichnet, dass** jede der zusätzlichen Schaufeln (6) einen Flügelabschnitt (9) hat, dessen Höhe (H) geringer ist als die Höhe (K) des Flügelabschnitts (5, 50) der tragenden Schaufeln (2, 20).

4. Rotorstufe einer Axialturbine gemäß dem obigen Anspruch, **dadurch gekennzeichnet, dass** der Fuß (10) einen Querschnitt, gewonnen mit einer Ebene senkrecht zur Achse (A), hat, welcher zumindest über eine Länge ausgehend von der Achse (A) spitz zuläuft.

5. Rotorstufe einer Axialturbine gemäß einem der Ansprüche 1 oder 2, **dadurch gekennzeichnet, dass** sie mindestens eine mehrfach tragende Schaufel (106) umfasst, die einen primären Flügelabschnitt (114) hat, welcher sich in mindestens zwei sekundäre Flügelabschnitte (115A, 115B) verzweigt, wobei die beiden sekundären Flügelabschnitte (115A, 115B) durch eine Basis (107) verbunden sind, welche sich von dem primären Flügelabschnitt (114) in eine im Wesentlichen tangentiale Richtung (T) und in die zwei Wege erstreckt, wobei mindestens eines der Enden der Basis (107) sich über die entsprechenden sekundären Flügelabschnitte (115A, 115B) hinaus in eine tangentiale Richtung (T) erstreckt.

6. Rotorstufe einer Axialturbine gemäß dem obigen Anspruch, **dadurch gekennzeichnet, dass** sie eine Mehrfach-Schaufel (206) umfasst, wobei zwei der sekundären Flügelabschnitte (215A, 215B) mit Bezug auf die radiale Richtung (R), ausgehend von der Achse (A), durch eine untere Basis (207A) und eine obere Basis (207B) verbunden sind, die sich in eine im Wesentlichen tangentiale Richtung (T) erstrecken und mit den sekundären Flügelabschnitten (215A, 215B) ein geschlossenes Viereck bilden.

7. Rotorstufe einer Axialturbine gemäß einem oder mehreren der Ansprüche 1 bis 4, **dadurch gekennzeichnet, dass** die zusätzliche Schaufel (6) aus einem Material mit niedrigerer Dichte besteht als das Material, aus dem die tragenden Schaufeln (2, 20) bestehen.

8. Rotorstufe einer Axialturbine gemäß dem obigen Anspruch, **dadurch gekennzeichnet, dass** die zusätzliche Schaufel (6) aus Aluminiumlegierung besteht und die tragenden Schaufeln (2, 20) aus Stahllegierung bestehen.

9. Rotorstufe einer Axialturbine gemäß Anspruch 7, **dadurch gekennzeichnet, dass** die zusätzliche Schaufel (6) aus einem Verbundmaterial besteht.

## Revendications

1. Étage de rotor d'une turbine axiale comprenant un arbre (1) apte à tourner autour d'un axe (A) et une pluralité de pales dotées d'au moins une section d'aube qui s'étend dans un sens substantiellement radial (R) perpendiculairement à l'axe (A) à une première distance radiale (R1) de l'axe (A), étant disposées ici un certain nombre de sections d'aubes plus bas que le certain nombre de sections d'aubes qui sont disposées à une seconde distance radiale (R2) de l'axe (A); la première distance radiale (R1) étant inférieure à la seconde distance radiale (R2); ledit étage de rotor comprenant une pluralité de pales porteuses (2, 20) dont chacune comprend une racine (3, 30), un haut de racine (13, 130), une pointe de pale (4, 40) et une section d'aube (5, 50) ayant un côté aspiration (16) et un côté pression (17) et s'étendant depuis le haut de racine (13, 130) jusqu'à la pointe de pale (4, 40) dans un sens substantiellement radial (R), ledit étage de rotor comprenant en outre une pluralité de pales supplémentaires (6) dont chacune comprend une pointe de pale (8), une base (7), une section d'aube (9) s'étendant depuis la base (7) jusqu'à la pointe de pale (8) dans un sens substantiellement radial (R), ledit étage de rotor étant **caractérisé en ce que** ladite racine (3, 30) est apte à contraindre la pale porteuse sur l'arbre (1); et **en ce que** chaque pale supplémentaire (6) comprend un pied (10) s'étendant depuis la base (7) dans un sens substantiellement tangentiel (T) perpendiculairement à l'axe (A) et au sens radial (R), lesdites pales porteuses (2, 20) comprenant un premier et un second éléments de repos (11, 12) s'étendant depuis les côtés aspiration et pression de la section d'aube respectivement dans un sens substantiellement tangentiel (T), ledit pied (10) étant apte à contraindre les éléments de repos (11, 120) de deux pales porteuses consécutives pour connecter la pale supplémentaire (6) auxdites deux lames porteuses consécutives (2, 20).

2. Étage de rotor selon la revendication 1, **caractérisé en ce qu'**il comporte, dans un plan perpendiculaire à l'axe (A), une couronne circulaire interne (C1) et une couronne circulaire externe (C2), toutes deux centrées sur l'axe (A) et espacées par un élément circonférentiel (23) composé par la succession des pieds (10) des pales supplémentaires (6) et les éléments de repos (11, 12) des pales porteuses (2, 20), ladite couronne circulaire interne (C1) comprenant un certain nombre de sections d'aubes plus basses que le certain nombre de sections d'aubes comprises dans la couronne circulaire externe (C2).

3. Étage de rotor d'une turbine axiale selon la revendication précédente, **caractérisé en ce que** chacune desdites pales supplémentaires (6) a une hauteur (H) de section d'aube (9) inférieure à la hauteur (K) de la section d'aube (5, 50) des pales porteuses (2,20).

4. Étage de rotor d'une turbine axiale selon la revendication précédente, **caractérisé en ce que** ledit pied (10) a une section transversale obtenue avec un plan perpendiculaire à l'axe (A) qui, au moins sur une longueur, se rétrécit à partir de l'axe (A).

5. Étage de rotor d'une turbine axiale selon une des revendications 1 ou 2, **caractérisé en ce qu'**il comprend au moins une pale porteuse multiple (106) dotée d'une section d'aube primaire (114) qui se ramifie en au moins deux sections d'aubes secondaires (115A, 115B), les deux sections d'aubes secondaires (115A, 115B) étant connectées par une base (107) qui s'étend depuis la section d'aube primaire (114) dans un sens substantiellement tangentiel (T) et dans les deux trajectoires, au moins une des extrémités de la base (107) s'étendant dans un sens tangentiel (T) au-delà des sections d'aubes secondaires correspondantes (115A, 115B).

6. Étage de rotor d'une turbine axiale selon la revendication précédente, **caractérisé en ce qu'**il comprend une pale multiple (206), deux desdites sections d'aubes secondaires (215A, 215B) étant connectées, en se référant au sens radial (R) en partant de l'axe (A), par une base de fond (207A) et une base de sommet (207B) s'étendant dans un sens substantiellement tangentiel (T) en formant un quadrilatère fermé avec les sections d'aubes secondaires (215A, 215B).

7. Étage de rotor d'une turbine axiale selon une ou plusieurs des revendications 1 à 4, **caractérisé en ce que** ladite pale supplémentaire (6) est composée d'un matériau ayant une densité inférieure à la densité du matériau dont les pales porteuses (2, 20) sont composées.

8. Étage de rotor d'une turbine axiale selon la revendication précédente, **caractérisé en ce que** ladite pale supplémentaire (6) est composée d'un alliage d'aluminium et que les pales porteuses (2, 20) sont composées d'un alliage d'acier.

9. Étage de rotor d'une turbine axiale selon la revendication 7, **caractérisé en ce que** ladite pale supplémentaire (6) est composée d'un matériau composite.
